# EUROPÄISCHE PATENTSCHRIFT

(11) **EP 1 088 252 B1**
(45) Veröffentlichungstag und Bekanntmachung des Hinweises auf die Patenterteilung: **26.02.2003**
(21) Anmeldenummer: 99936344.3
(22) Anmeldetag: 28.05.1999
(51) Int. Cl.: G02B 21/00

(54) **ANALYSATOR-EINSCHUB FÜR EIN POLARISATIONSMIKROSKOP**
ANALYZER INSERT FOR A POLARIZING MICROSCOPE
INSERT D'ANALYSEUR POUR UN MICROSCOPE POLARISANT

(30) Priorität: 18.06.1998 DE 19827175
(43) Veröffentlichungstag der Anmeldung: 04.04.2001
(73) Patentinhaber: Leica Microsystems Wetzlar GmbH, 35578 Wetzlar (DE)
(72) Erfinder: GAUL, Norbert, D-35606 Solms-Oberbiel (DE)
(74) Vertreter: Reichert, Werner F., Dr.
(86) Internationale Anmeldenummer: DE9901574
(87) Internationale Veröffentlichungsnummer: WO99066363

(56) Entgegenhaltungen:
- EP-A- 0 610 945
- DE-U- 6 922 326
- PATENT ABSTRACTS OF JAPAN vol. 1996, no. 09, 30. September 1996 (1996-09-30) & JP 08 124990 A (DAINIPPON SCREEN MFG CO LTD), 17. Mai 1996 (1996-05-17)
- RUDOLF FRANKE: "Vom Aufbau der Getriebe, II. Band, die Baulehre der Getriebe" , DEUTSCHER INGENIEUR-VERLAG GMBH , DÜSSELDORF XP002122982 Seite 72-74; Abbildung 341

## Beschreibung

Die Erfindung betrifft einen Analysator-Einschub für ein Polarisationsmikroskop mit den Merkmalen des Oberbegriffs des Patentanspruchs 1.

Die DE-GM 69 22 326 beschreibt einen Analysator für ein Polarisationsmikroskop, bei dem auf einem in den Mikroskopstrahlengang einschiebbaren Träger ein manuell betätigbares, außen liegendes Verstellrad und in Einschubrichtung benachbart hierzu ein in den Mikroskopstrahlengang einschiebbarer, innen liegender Analysator in einer drehbaren Analysatorfassung montiert sind. Eine Getriebekombination aus einer Schraube am Verstellrad und einem Zahnkranz an der Analysatorfassung dient zur Übertragung der Drehbewegung des Verstellrads auf den Analysator. Der Nachteil dieser Konstruktion liegt darin, daß Getriebe mit Zahnrädern zum einen sehr teuer sind und zum anderen ein großes Einbaumaß für den Analysator-Einschub zur Folge haben.

Die DE-AS 12 78 134 beschreibtein Interferenz-Zusatzgerät für ein Polarisationsmikroskop mit auf einem Träger angeordneten Kristallplättchen. Dieser ist mittels einer Schubstange senkrecht zum Mikroskopstrahlengang verschiebbar und mittels Rastvorrichtungen in definierte Raststellungen bringbar. Eine Positionierung zwischen den Raststellungen und eine Drehung der Kristallplättchen ist nicht möglich. Außerdem benötigen die Schubstange und die Rastvorrichtungen viel Platz.

Die EP 0 610 945 beschreibt einen Analysator-Einschub für ein Polarisationsmikroskop, wobei das Übertragungsmittel der Drehbewegung des Verstellrads als Riemen kupplung ausgebildet ist.

Das Buch "Vom Aufbau der Getriebe", Rudolf Franke, Deutscher Ingenieur - Verlag Gmbh, Düsseldorf, Seiten 72-74 offenbart ein zweiphasiges Übertragungsmittel der Drehbewegung mit jeweiliger Zug- und Druckwirkung in den Koppelstangen.

Es ist Aufgabe dieser Erfindung, einen kostengünstigen Analysator-Einschub geringer Höhe zu schaffen, der für den Analysator einen Verstellbereich von 180° besitzt und eine präzise und schlupffreie Einstellung erlaubt.

Diese Aufgabe wird gelöst durch einen Analysator-Einschub, der die Merkmale des unabhängigen Anspruchs 1 aufweist. Die Unteransprüche geben vorteilhafte Ausgestaltungen an.

Bei dem erfindungsgemäßen Analysator-Einschub wird die Drehbewegung des Verstellrads durch zwei gleichlange, zueinander parallele Verstellhebel auf den drehbaren Analysator übertragen. Dazu sind die einen Enden der Verstellhebel am Verstellrad und die anderen Enden an der Analysatorfassung auf jeweils randnahen Lagerachsen drehbar gelagert. Die Lagerachsen sind so angeordnet, daß sie an dem Verstellrad und an der Analysatorfassung bezüglich deren Drehachsen gleichlange Krafthebel erzeugen, die jeweils unter einem Winkel von 90° zueinander stehen.

In der Ausgangsstellung, entsprechend der 0°-Position, liegen alle vier Lagerachsen auf einer Geraden. Um dies zu erreichen, ist beispielsweise der eine Verstellhebel höher gelagert als der andere. Dadurch können die Verstellhebel in der Ausgangsposition teilweise übereinander liegen. Eine andere Möglichkeit besteht darin, die Verstellhebel mit jeweils abgewinkelten Enden auszubilden. Dadurch können die vier Lagerachsen auf einer Geraden zu liegen kommen, auch wenn die beiden Verstellhebel auf derselben Höhe gelagert sind. Zusätzlich können die Verstellhebel Ausformungen aufweisen, die ein Anschlagen an die Lagerachse des jeweils anderen verhindern.

Durch Drehen am Verstellrad werden die Lagerachsen sowohl am Verstellrad als auch an der Analysatorfassung weitergedreht und die beiden Verstellhebel in einen größeren Abstand zueinandergebracht. In der 90°-Position ist ihr Abstand am größten, und sie befinden sich symmetrisch zu beiden Seiten der Verbindungslinie, die durch die Drehachsen von Verstellrad und Analysator gebildet wird. Beim Weiterdrehen verringert sich der Abstand der Verstellhebel wieder, bis die vier Lagerpunkte in der 180°-Position entgegengesetzt zur Ausgangsposition wieder auf einer Geraden liegen. Auch für diese Position erweist es sich als vorteilhaft, die Verstellhebel und ihre Anordnung so zu gestalten, wie dies bereits für die O°-Position beschrieben wurde.

Durch den Einsatz zweier Verstellhebel in der beschriebenen Geometrie wird eine gleichmäßige und präzise Drehbewegung zwischen 0° und 180° ermöglicht und dabei vermieden, daß bei der Drehung des Verstellrads und der Kraftübertragung ein Totpunkt auftritt.

Die Drehung am Verstellrad muß in der richtigen Richtung vorgenommen werden, damit die Verstellhebel die Analysatorfläche nicht überstreichen und dadurch den Mikroskop-Strahlengang abschatten. Dies wird durch Markierungen oder Anschläge erreicht, die eine Drehung über die 0°- bzw. die 180°-Position hinaus verhindern.

Dazu sind mit Vorteil die Lagerachsen am Verstellrad und/oder an der Analysatorfassung jeweils an derselben Fläche angebracht. Dann laufen die an derselben Fläche angeordneten Verstellhebel in den "Endpositionen" 0° und 180° gegen die jeweils andere Lagerachse und drehen nicht weiter. Um eine besonders flache Bauform zu erzielen, können die Verstellhebel aus dünnen Blechen gefertigt werden. Diese könnten möglicherweise verbogen werden, wenn die Verstellhebel gegeneinander laufen. Um dieses zu verhindern, wird vorzugsweise der Analysator-Einschub zusätzlich mit einem Überfahrschutz ausgestattet. Dazu werden an dem Verstellrad zwei überstehende Stifte entsprechend der 0°- bzw. der 180°-Einstellung des Analysators montiert. Im Schwenkbereich dieser Stifte ist an dem Träger eine Anschlagschraube angeordnet, gegen welche die Stifte in der 0°- bzw. der 180°-Einstellung des Analysators anschlagen. Damit wird das Überfahren der entsprechenden Positionen verhindert.

Die Verstellhebel können preiswert aus identischen, dünnen Blechstreifen gefertigt werden. Als Lagerachsen sind einfache MetaHstifte verwendbar. An den Enden der Blechstreifen werden Bohrlöcher angebracht, deren Durchmesser nur geringfügig größer als der Durchmesser der Stifte ist. Damit können die Verstellhebel spielfrei um die Lagerachsen drehen.

Der erfindungsgemäße Analysator-Einschub ist damit einfach und mit preiswerten Bauteilen zu realisieren und damit wesentlich kostengünstiger als bekannte Analysator-Einschübe mit Zahnrädern oder Treibriemen. Auch das bei diesen auftretende Problem des Schlupfes existiert nicht, da die Kraftübertragung direkt mit starren Verstellhebeln erfolgt.

Durch den Einsatz der Verstellhebel wird eine besonders flache Bauform erzielt. Insbesondere unter Verwendung von dünnen Blechstreifen als Verstellhebel ist es möglich, die Dicke des Einschubs einschließlich der lichtdurchlässigen Schutzabdeckung vor dem Analysator auf 5 mm zu begrenzen. Ein solches Ausführungsbeispiel der Erfindung wird nachfolgend anhand der schematischen Zeichnungen näher erläutert.

Es zeigen:
- ***Fig.1a:***: einen Analysator-Einschub in der Aufsicht in 0°-Position;
- ***Fig.1b:***: einen Analysator-Einschub in der Aufsicht in 90°-Position;
- ***Fig.1c:***: einen Analysator-Einschub in der Aufsicht in 180°-Position;
- ***Fig.2 :***: eine vorteilhaft gestaltete Analysatorfassung mit Führungsschlitzen für die Verstellhebel;
- ***Fig.3 :***: einen Längsschnitt durch den Analysator-Einschub, wie er in ***Fig.1a-c*** bzw. ***Fig.2*** dargestellt ist.

***Fig.1a*** zeigt einen Analysator-Einschub 1 in der Aufsicht in 0°-Position. Er besteht aus einem Träger 5, an dem ein von außen betätigbares Verstellrad 2 mit einer Drehachse 15 und in Einschubrichtung in einem Abstand daneben eine Analysatorfassung 4 montiert ist. Die Analysatorfassung 4 ist um eine Drehachse 16 drehbar gelagert. In der Analysatorfassung 4 ist ein Analysator 3 mit einer geringen Neigung (ca. 3,5°) gegenüber der Drehachse 16 eingebaut. Das Träger 5 weist an seinem über den Analysator 3 hinausreichenden Ende ein Leerloch 6 auf.

Der Analysator-Einschub 1 ist mittels zweier Nuten 29 in zwei Raststellungen arretierbar. In der ersten Raststellung ist das Leerloch 6 so in das Mikroskop eingefügt, daß der Mikroskopstrahlengang mit einer optischen Achse 7 unbeeinflußt hindurchtreten kann. Durch Verschieben des Analysator-Einschubs 1 in Einschubrichtung über die erste Raststellung hinaus wird die zweite Raststellung erreicht und der Analysator 3 in den optischen Strahlengang des Mikroskops gebracht. Die Drehachse 16 der Analysatorfassung 4 fällt in dieser Stellung im Mikroskop-Strahlengang mit der optischen Achse 7 des Mikroskops zusammen. Um dabei im Mikroskop-Strahlengang unerwünschte Reflexe zu vermeiden, ist der Analysator 3 in der Analysatorfassung 4 mit einer geringen (nicht dargestellten) Neigung gegenüber der Drehachse 16 eingebaut. Seine Durchlaßrichtung 18 wird in der Darstellung durch einen Pfeil symbolisiert.

Zwischen dem Verstellrad 2 und der Analysatorfassung 4 sind zwei gleich lange Verstellhebel 8 und 9 angeordnet, die die Drehbewegung des Verstellrads 2 auf die Analysatorfassung 4 und damit den Analysator 3 übertragen. Dazu sind die einen Enden 10 und 11 der Verstellhebel 8 und 9 am Verstellrad 2 und ihre anderen Enden 12 und 13 an der Analysatorfassung 4 auf jeweils randnahen Lagerachsen 14 drehbar gelagert. Diese Lagerachsen 14 bilden sowohl bezüglich der Drehachse 15 des Verstellrads als auch bezüglich der Drehachse 16 der Analysatorfassung jeweils zwei gleich lange Krafthebel 17 unter einem Winkel von 90°. Die Verstellhebel 8,9 sind in Richtung ihrer am Analysator 3 gelagerten Enden 12, 13 so bogenförmig ausgeformt, daß auch bei eingeschobenem Analysator-Einschub 1 in der Ausgangsstellung keine Abschattung des Mikroskopstrahlengangs durch die Verstellhebel 8,9 auftritt.

In der hier dargestellten Ausgangsstellung, die der 0°-Position des Analysators 3 entsprechen soll, liegen alle Lagerachsen 14 auf einer Geraden und die beiden Verstellhebel 8 und 9 liegen parallel und einander teilweise überdekkend in zwei Ebenen dicht übereinander. Eine Feststellschraube 19 erlaubt, die eingestellte Orientierung des Analysators 3 festzuhalten. Zur Einstellung einer neuen Orientierung des Analysators 3 wird dann die Feststellschraube 19 wieder gelöst. Zur besseren Orientierung des Mikroskopbenutzers ist das Verstellrad 2 mit einer Gradeinteilung 22 versehen.

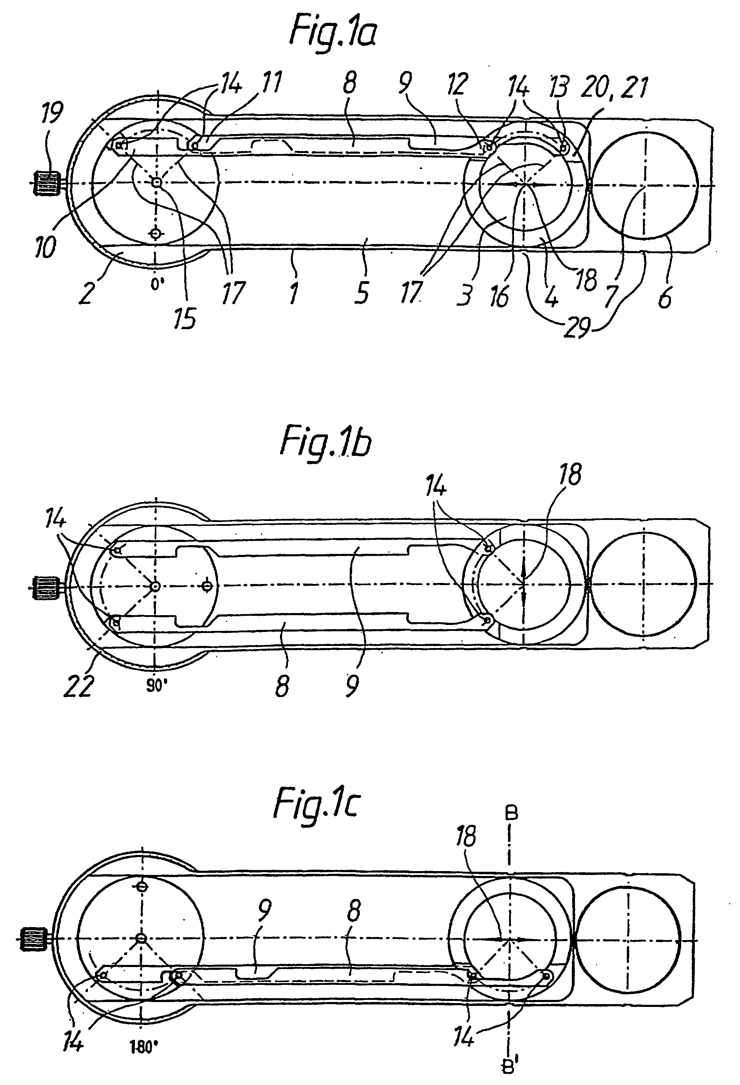

Durch Verdrehen des Verstellrads 2 entgegen dem Uhrzeigersinn wird der Analysator 3 in die 90°-Position gebracht, die in ***Fig. 1b*** dargestellt ist. Die aktuelle Durchlaßrichtung 18 des Analysators 3 ist dargestellt. Entsprechend der Bewegung des Verstellrads 2 sind die Verstellhebel 8 und 9 mit ihren drehbar gelagerten Enden 10 und 11 bzw. 12 und 13 ebenfalls weiter gewandert und befinden sich jetzt in einem etwas größeren Abstand parallel und symmetrisch zur Verbindungslinie der Drehachsen 15 und 16 von Verstellrad 2 und Analysator 3.

Durch erneutes Drehen des Verstellrads 2 entgegen dem Uhrzeigersinn bringt man den Analysator 3 in die 180°-Position, die in ***Fig. 1c*** dargestellt ist. Die neue erzielte Durchlaßrichtung 18 des Analysators 3 ist wieder angegeben. In dieser Einstellung befinden sich die beiden Verstellhebel 8 und 9 in der unteren Position und ihre Lagerachsen 14 liegen wiederum auf einer Geraden.

Bei dem in den ***Fig.1a-c*** dargestellten Analysator-Einschub 1 handelt es sich um eine besonders vorteilhafte Ausführungsform, die mit einer maximalen Dicke von 5 mm realisiert werden kann. Dazu sind die Verstellhebel 8 und 9 aus dünnen Blechen gefertigt und die Analysatorfassung 4 ist speziell für die angestrebte flache Bauform ausgebildet. Sie weist zwei kreissegmentförmige, parallel angeordnete Schlitze 20, 21 auf, in welche die Enden 12 und 13 der Verstellhebel 8 und 9 hineingreifen und auf diese Weise geführt werden. Der Schlitz 20 dient dabei als Aufnahme für den oberen Verstellhebel 8 und ist als Abfräsung an der Oberfläche der Analysatorfassung 4 herausgearbeitet. Der Schlitz 21 dient als Aufnahme für den unteren Verstellhebel 9 und ist unter dem Schlitz 20 in die Analysatorfassung 4 eingearbeitet.

Durch die parallel angeordneten Schlitze 20, 21 laufen die Verstellhebel 8,9 auf unterschiedlichen Ebenen. In den ***Fig. 1a-c*** erscheint daher der Verstellhebel 8 als der oben liegende und der Verstellhebet 9 als der unten liegende, welcher in den ***Fig. 1a-c*** teilweise durch den Verstellhebel 8 und die Analysatorfassung 4 abgedeckt wird. Die zugehörigen Lagerachsen 14 sind entsprechend in den Schlitzen 20, 21 eingelassen. Die Schlitze 20, 21 können zusätzlich deckungsgleich gefertigt sein.

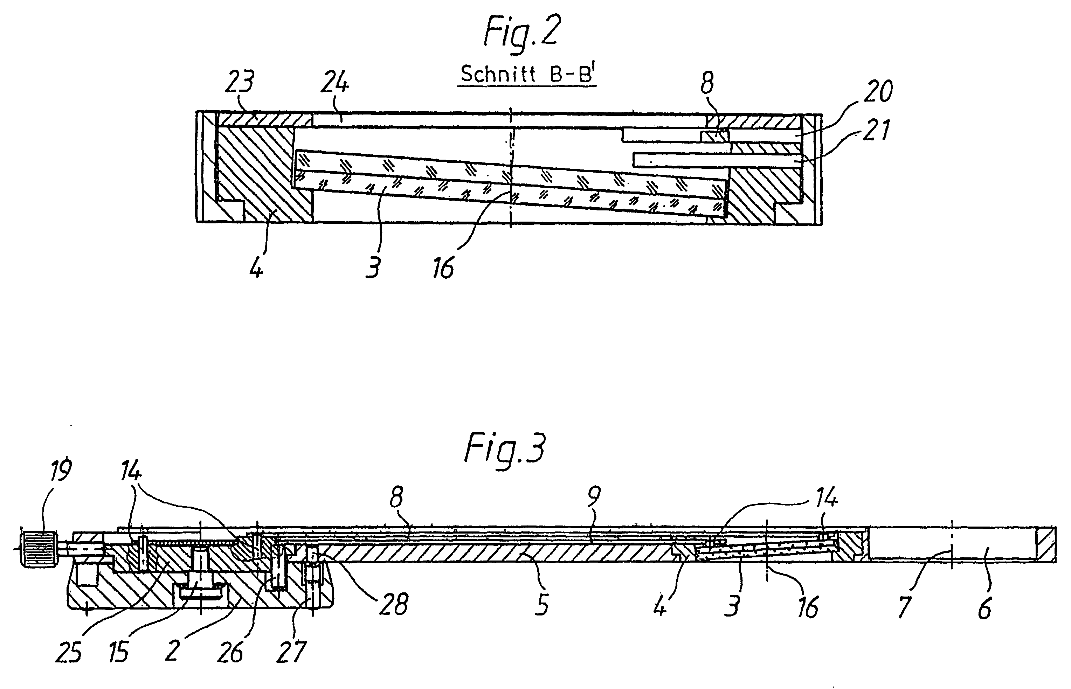

Wie aus den ***Fig. 1a-c*** ersichtlich ist, schwenken die Schlitze 20, 21 bei der Einstellung der verschiedenen Analysator-Positionen mit. Sowohl in der 0°-Position als auch der 180°-Position wird durch die Schlitze 20, 21 zusätzlich der Drehbereich der Analysatorfassung 4 und damit auch des Verstellrads 2 auf maximal 180° begrenzt. Dadurch ist es nicht mehr möglich, die Verstellhebel 8, 9 über die Analysatorfläche zu schwenken und den Strahlengang des Mikroskops abzuschatten. Damit die dünnen Bleche der Verstellhebel 8,9 nicht an das jeweilige Ende des zugehörigen Schlitzes anstoßen, ist hier mit Vorteil zusätzlich ein Überfahrschutz angebracht, wie weiter unten anhand von ***Fig. 3*** beschrieben wird.

***Fig. 2*** zeigt eine stark vergrößerte Detaildarstellung der erfindungsgemäßen Analysatorfassung 4 mit den Schlitzen 20, 21. Sie entspricht einem Schnitt entlang der Linie BB' durch die ***Fig. 1c***. Dargestellt sind die Analysatorfassung 4 mit eingebautem Analysator 3 und ein Deckel 23 aus dünnem Blech mit einem lichtdurchlässigem Fenster 24. Der obere Schlitz 20 ist vorteilhaft als Abfräsung an der Oberfläche der Analysatorfassung 4 und der untere Schlitz 21 als eingebetteter Schlitz innerhalb der Analysatorfassung 4 ausgebildet. Weil die Oberkante des oberen Schlitzes 20 durch den Deckel 23 abgedeckt wird, kann die Analysatorfassung 4 besonders dünn gestaltet werden.

In den oberen Schlitz 20 faßt der obere Verstellhebel 8, der in dieser Schnittdarstellung zu sehen ist. In den unteren Schlitz 21 faßt der untere Verstellhebel 9, der in dieser Schnittdarstellung nicht erscheint. Die Schlitze 20, 21 sind sehr flach gestaltet, weil die Verstellhebel 8,9 aus dünnem Blech gefertigt sind.

Durch die platzsparende Anbringung der sehr flachen Schlitze 20, 21 in der Analysatorfassung 4 wird die Dicke des Analysator-Einschubs 1 fast nur noch von der Dicke der Analysatorfassung 4 selbst bestimmt. Diese ist hier dadurch vorgegeben, daß zur Vermeidung von störenden Reflexen im Mikroskopstrahlengang der Analysator 3 mit einer geringen Neigung ( hier beispielsweise von 3,5°) gegenüber der Drehachse 16 in die Analysatorfassung 4 eingebaut ist. In eingeschobenen Zustand des Analysator-Einschubs 1 fällt die Drehachse 16 des Analysators 3 mit der optischen Achse 7 des Mikroskops zusammen.

***Fig. 3*** zeigt einen Längsschnitt durch den Analysator-Einschub 1. Dargestellt sind ein Verstellrad 2 mit Drehachse 15 und ein Analysator 3 in einer Analysatorfassung 4 mit Drehachse 16. Sie sind an einem Träger 5 montiert. In der hier dargestellten Raststellung des Analysator-Einschubs 1 liegt die Mitte des Leerlochs 6 auf der optischen Achse 7 des Mikroskops. Durch Verschieben des gesamten Analysator-Einschubs 1 in die andere Raststellung kann alternativ der Analysator 3 anstelle des Leerlochs 6 in den Mikroskopstrahlengang gebracht und damit die Drehachse 16 der Analysatorfassung 4 mit der optischen Achse 7 des Mikroskops zur Deckung gebracht werden. Über einen Mitnahmebolzen 26 ist das Verstellrad 2 mit einem aufliegenden Flansch 25 verbunden, so daß der Flansch 25 jeder Bewegung des Verstellrads 2 folgt. Die Feststellschraube 19 zur Fixierung einer erzielten Analysator-Position greift an dem Flansch 25 an.

Die einen Enden der aus dünnen Blechen gefertigten Verstellhebel 8 und 9 sind mit Lagerachsen 14 an dem Flansch 25, die anderen Enden mit Lagerachsen 14 an der Analysatorfassung 4 gelagert. Die Lagerachsen 14 bestehen hier aus preiswerten Stiften. Da die Darstellung nur schwach vergrößert ist, können die Schlitze 20, 21 in der Analysatorfassung 4 hier nicht dargestellt werden.

Die Position der Verstellhebel 8,9 entspricht der Ausgangsstellung, also der 0°-Position des Analysators 3. Um ein Überfahren dieser Position zu verhindem, ist der Analysator-Einschub 1 mit einem Überfahrschutz ausgestattet. Er besteht aus einem überstehenden Stift 27, der entsprechend der 0°-Position des Analysators 3 an dem Verstellrad 2 angebracht ist. Im Schwenkbereich dieses Stiftes 27 ist an dem Träger 5 eine Anschlagschraube 28 montiert. Bei Erreichen der 0°-Position schlägt der Stift 27 gegen diese Anschlagschraube 28 und verhindert damit ein Überfahren der gewünschten Position. Zur Sicherung der 180°-Position ist ebenfalls ein solcher Stift vorgesehen, jedoch hier nicht dargestellt.

Der erzielte Analysator-Einschub ist extrem flach. Er arbeitet präzise und ist dennoch kostengünstig herzustellen. Die Erfindung ist nicht auf die dargestellten Ausführungsformen beschränkt, sondern umfaßt auch andere denkbare Ausgestaltungen der Merkmale des Anspruchs 1.

### Bezugszeichenliste

- 1.: Analysator-Einschub
- 2.: Verstellrad
- 3.: Analysator
- 4.: Analysatorfassung
- 5.: Träger
- 6.: Leerloch
- 7.: optische Achse des Mikroskops
- 8.: oberer Verstellhebel
- 9.: unterer Verstellhebel
- 10.: Ende des oberen Verstellhebels 8 am Verstellrad 2
- 11.: Ende des unteren Verstellhebels 9 am Verstellrad 2
- 12.: Ende des oberen Verstellhebels 8 an der Analysatorfassung 4
- 13.: Ende des unteren Verstellhebels 9 an der Analysatorfassung 4
- 14.: Lagerachsen
- 15.: Drehachse des Verstellrads 2
- 16.: Drehachse der Analysatorfassung 4
- 17.: Krafthebel
- 18.: Durchlaßrichtung des Analysators
- 19.: Feststellschraube
- 20.: oberer Schlitz bzw. Abfräsung für der oberen Verstellhebel 8
- 21.: unterer Schlitz für den unteren Verstellhebel 9
- 22.: Gradeinteilung
- 23.: Deckel
- 24.: Fenster in Deckel 23
- 25.: Flansch
- 26.: Mitnahmebolzen
- 27.: Stift
- 28.: Anschlagschraube
- 29.: Nuten

## Patentansprüche

1. Analysator-Einschub für ein Polarisationsmikroskop
- bei dem auf einem in den Mikroskopstrahlengang einschiebbaren Träger (5) ein manuell betätigbares, außen liegendes Verstellrad (2) und in Einschubrichtung benachbart hierzu ein in den Mikroskopstrahlengang einschiebbarer, innen liegender Analysator (3) in einer drehbaren Analysatorfassung (4) montiert sind
- und bei dem zwischen Verstellrad (2) und Analysator (3) Übertragungsmittel zur Übertragung der Drehbewegung des Verstellrads (2) auf den Analysator (3) angeordnet sind,
**dadurch gekennzeichnet,**
- **daß** als Übertragungsmittel zwei gleichlange, parallele Verstellhebel (8,9) vorgesehen sind, deren äußere, verstellradseitige Enden (10,11) am Verstellrad (2) und deren innere, analysatorseitige Enden (12,13) an der Analysatorfassung (4) an jeweils randnahen Lagerachsen (14) drehbar gelagert sind,
- welche bezüglich der Drehachse (15) des Verstellrads (2) als auch bezüglich der Drehachse (16) der Analysatorfassung (4) jeweils zwei gleichlange, senkrecht aufeinander stehende Krafthebel (17) erzeugen,
- wobei in einer Ausgangsstellung des Analysators (3) alle Lagerachsen (14) auf ein und derselben Seite bezüglich der Verbindungslinie der Drehachsen (15,16) des Verstellrades (2) und der Analysatorfassung (4) in ein und derselben Ebene liegen,
- wobei in einer Mittenstellung des Analysators (3) die beiden Verstellhebel (8,9) einen maximalen Abstand voneinander haben
- und wobei in einer Endstellung des Analysators (3) alle Lagerachsen (14) auf der anderen Seite bezüglich der Verbindungslinie der Drehachsen (15,16) in einer einzigen Ebene liegen, die zu der durch die Ausgangsstellung des Analysators (3) definierten Ebene parallel verläuft.

2. Analysator-Einschub nach Anspruch 1,
**dadurch gekennzeichnet, daß**
die Lagerachsen (14) am Verstellrad (2) und an der Analysatorfassung (4) jeweils an deren Ober- oder Unterseite angebracht sind.

3. Analysator-Einschub nach Anspruch 1 oder 2,
**dadurch gekennzeichnet, daß**
die beiden Verstellhebel (8,9) in zwei Ebenen übereinander liegen und hierzu die Lagerachsen (14) der beiden Verstellhebel (8,9) unterschiedlich lang ausgebildet sind.

4. Analysator-Einschub nach Anspruch 1 oder 2,
**dadurch gekennzeichnet, daß**
die beiden Verstellhebel (8,9) in der gleichen Ebene liegen und hierzu jeweils abgewinkelte Enden (10,11,12,13) aufweisen.

5. Analysator-Einschub nach einem der Ansprüche 1 bis 4,
**dadurch gekennzeichnet, daß**
die Analysatorfassung (4) zwei übereinander liegende, kreisringsegmentförmige Schlitze (20,21) senkrecht zu ihrer Drehachse (16) aufweist, in welchen die Lagerachsen (14) angeordnet sind.

6. Analysator-Einschub nach Anspruch 5,
**dadurch gekennzeichnet, daß**
die Schlitze (20,21) deckungsgleich sind.

7. Analysator-Einschub nach Anspruch 5 oder 6,
**dadurch gekennzeichnet, daß**
der eine Schlitz (21) innerhalb der Analysatorfassung (4) und der andere Schlitz (20) als Abfräsung an der Oberseite der Analysatorfassung (4) ausgebildet ist.

8. Analysator-Einschub nach einem der Ansprüche 1-7,
**dadurch gekennzeichnet, daß**
am Verstellrad (2) zwei überstehende Stifte (27) entsprechend der 0-Grad- und der 180-Grad-Einstellung des Analysators (3) montiert sind und daß im Schwenkbereich dieser Stifte (27) an dem Träger (5) des Analysator-Einschubs (1) eine Anschlagschraube (28) angeordnet ist, welche das Überfahren der 0-Grad- und der 180-Grad-Einstellung des Analysators (3) verhindert.

9. Analysator-Einschub nach einem der Ansprüche 1 bis 8,
**dadurch gekennzeichnet, daß**
die Verstellhebel (8,9) an ihren an der Analysatorfassung (4) gelagerten Enden (12,13) Ausformungen aufweisen, die dem Rand des Analysators (3) angepaßt sind und gewährleisten, daß in allen Stellungen des Verstellrades (2) und des Analysators (3) die Verstellhebel (8,9) außerhalb der optisch wirksamen Fläche des Analysators (3) verbleiben.

10. Analysator-Einschub nach einem der Ansprüche 1 bis 9,
**dadurch gekennzeichnet, daß**
die Lagerachsen (14) als Lagerstifte ausgebildet sind.

11. Analysator-Einschub nach einem der Ansprüche 1 bis 10,
**dadurch gekennzeichnet, daß**
die Verstellhebel (8,9) aus dünnen Blechstreifen bestehen.

12. Analysator-Einschub nach einem der Ansprüche 1 bis 11,
**dadurch gekennzeichnet, daß**
der Analysator (3) innerhalb der Analysatorfassung (4) mit einer geringen Neigung gegenüber der optischen Achse (7) des Mikroskopstrahlengangs montiert ist.

13. Analysator-Einschub nach einem der Ansprüche 1 bis 12,
**dadurch gekennzeichnet, daß**
der in das Polarisationsmikroskop eingeführte Teil des Analysator-Einschubs (1) eine maximale Dicke von fünf Millimeter aufweist.

## Claims

1. An analyzer insert for a polarization microscope
- in which are mounted on a support (5) that can be inserted into the optical path of the microscope an externally positioned adjusting wheel (2) that can be manipulated by hand and adjacent thereto, in the direction of insertion, an internally positioned analyzer (3) that is mounted on a rotating analyzer mount (4),
- and in which transmission means for transmitting the rotating motion of the adjusting wheel (2) to the analyzer (3) are positioned between the adjusting wheel (2) and the analyzer (3),
**characterized in that**
- two equally long, parallel adjusting levers (8, 9) are provided as transmission means whose outer ends (10, 11), on the side of the adjusting wheel, are mounted in rotating fashion on the adjusting wheel (2) and whose inner ends, on the side of the analyzer (12, 13), are mounted in rotating fashion on the analyzer mount (4), in each case with bearing axles (14)close to the edge,
- which relative to the rotating axis (15) of the adjusting wheel (2) and relative to the rotating axis (16) of the analyzer mount (4), two equally long power levers (17) that lie at right angles one to the other
- where in an initial position of the analyzer (3) all bearing axles (14) lie on one and the same side of die line connecting the rotating axes (15, 16) of the adjusting wheel (2) and the analyzer mount (4) and on one and the same plane
- while in the center position of the analyzer (3) the two adjusting levers (8, 9) lie at the maximum distance apart,
- and in a terminal position of the analyzer (3) all bearing axles (14) lie on the other side of the line connecting the rotating axes (15, 16), in a single plane which runs parallel to the plane defined by the initial position of the analyzer (3).

2. The analyzer insert according to claim 1, wherein the bearing axles (14) on the adjusting wheel (2) and the analyzer mount (4) are in each case positioned on the upper or lower side.

3. The analyzer insert according to claim 1 or 2, wherein the two adjusting lever (8, 9) lie on two planes, one above the other, and the corresponding bearing axles (14) of the two adjusting levers (8, 9) are of differing length.

4. The analyzer insert according to claim 1 or 2, wherein the two adjusting levers (8, 9) lie on the same plane and exhibit ends (10, 11, 12, 13) that are bent relative to said plane.

5. The analyzer insert according to one of the claims 1 to 4, wherein the analyzer mount (4) exhibits two slots (20, 21), one lying above the other, that form circular segments perpendicular to their axis of rotation (16), in which the bearing axles (14) are positioned.

6. The analyzer insert according to claim 5, wherein the slots (20, 21) are congruent.

7. The analyzer insert according to claim 5 or 6, wherein one slot (21) is formed on the inside of the analyzer mount (4) and the other slot (20) is formed as a milled down area on the upper side of the analyzer mount (4).

8. The analyzer insert according to one of the claims 1-7, wherein two protruding pins (27) are mounted on the adjusting wheel (2), corresponding to the 0° degree and the 180° degree position of the analyzer (3), and positioned on the support (5) of the analyzer insert (1) in the swivel range of these pins (27) is a stop screw (28) which prevents the 0° degree and the 180° degree position of the analyzer (3) from being overrun.

9. The analyzer insert according to one of the claims 1 to 8, wherein the adjusting levers (8, 9) exhibit recesses on their ends (12, 13) secured to the analyzer mount (4), which recesses fit the edge of the analyzer (3) and assure that the adjusting levers (8, 9) remain outside of the optically effective area of the analyzer (3) in all positions occupied by the adjusting wheel (2) and the analyzer (3).

10. The analyzer insert according to one of the claims 1 to 9, wherein the bearing axles (14) are designed as pins.

11. The analyzer insert according to one of the claims 1 to 10, wherein the adjusting levers (8, 9) consist of thin metal strips.

12. The analyzer insert according to one of the claims 1 to 11, wherein the analyzer (3) is mounted within the analyzer mount (4) at a slight incline relative to the optical axis (7) of the optical path of the microscope.

13. The analyzer insert according to one of the claims 1 to 12, wherein the part of the analyzer insert (1) introduced into the polarization microscope has a maximum thickness of five millimeters.

## Revendications

1. Insert d'analyseur pour un microscope polarisant, qui a un support (5), qui est insérable dans le trajet des rayons d'un microscope, sur lequel une roue de commande (2), qui est actionné manuellement et qui est positionné à l'extérieur, et un analyseur, qui est positionné 'l'intérieur à coté de la roue de commande et qui est insérable dans le trajet des rayons d'un microscope, sont montés sur une monture d'analyseur tournant (4), et qui a entre la roue de commande 2 et l'analyseur (3) des moyens pour transmettre un mouvement rotatif de la roue de commande 2 sur l'analyseur (3), **caractérisé en ce que** comme moyen de transmettre deux leviers (8, 9) sont prévus, qui sont arrangés parallèlement et qui ont la même longueur, dont les bouts extérieurs (10, 11) sur la coté de la roue de commande (2) sont tournaillés à la roue de commande (2) et dont les bouts intérieurs sur la coté de la monture d'analyseur (4) sont tournaillés à la monture d'analyseur (4) par des axes de paliers (14), qui se trouvent près de la bord, et qui produisent des leviers de force 17 de même longueur relativement à l'axe rotatif (15) de la roue de commande (2) et aussi relativement à l'axe rotatif (16) de la monture d'analyseur (4), de sorte que dans une position initiale de l'analyseur (3) toutes les axes de paliers (14) se trouvent sur la même coté relativement à la ligne entre les axes rotatif (15, 16) de la roue de commande (2) et la monture d'analyseur (4) et dans le même plan et de sorte que la distance des leviers (8, 9) sont maximale dans une position de milieu et de sorte que dans une position finale de l'analyseur (3) toutes les axes de paliers (14) se trouvent sur la même coté relativement à la ligne entre les axes rotatif (15, 16) de la roue de commande (2) et la monture d'analyseur (4) et dans le même plan, qui est parallèle au plan définit par la position initiale de l'analyseur (3).

2. Insert d'analyseur selon revendication 1, **caractérisé en ce que** les axes de paliers (14) sont montés à la roue de commande (2) et à la monture d'analyseur (4) respectivement sur la face supérieur ou inférieur.

3. Insert d'analyseur selon revendication 1 ou 2, **caractérisé en ce que** les deux leviers (8, 9) se trouvent dans deux plans parallèle et que les axes de paliers (14) ont des longueurs différentes.

4. Insert d'analyseur selon revendication 1 ou 2, **caractérisé en ce que** les deux leviers (8, 9) se trouvent le même plan et qu' ils ont des bouts coudés.

5. Insert d'analyseur selon l'une quelconque des revendications 1 à 4, **caractérisé en ce que** la monture d'analyseur (4) montre deux fentes (20, 21), qui ont la forme d'un segment circulaire, dans lesquelles les axes de paliers (14) sont disposés.

6. Insert d'analyseur selon revendication 5, **caractérisé en ce que** les fentes (20, 21) sont fabriqué d'un façon coïncidente.

7. Insert d'analyseur selon revendication 5 ou 6, **caractérisé en ce que** une des fentes (21) est disposée dans la monture d'analyseur (4) et que l'autre fente est formé comme un fraisage à la surface de la monture d'analyseur 4

8. Insert d'analyseur selon l'une quelconque des revendications 1 à 7, **caractérisé en ce que** deux goupilles (27) saillant sont montées à la roue de commande (2) correspondant à la position de 0° et la position de 180° de l'analyseur 3. et que dans la gamme de basculement de cette goupilles (27) une vis d'arrêt (28) est monté au support (5) de l'insert d'analyseur (1), qui évite un dépassement de la position de 0° et de la position de 180°.

9. Insert d'analyseur selon l'une quelconque des revendications 1 à 8, **caractérisé en ce que** les leviers (8, 9) ont des développements aux bouts (12, 13), qui sont adaptés à la monture d'analyseur (4) et qui les leviers (8, 9) restent dehors du plan actif de l'analyseur (3).

10. Insert d'analyseur selon l'une quelconque des revendications 1 à 9, **caractérisé en ce que** les axes de paliers (14) sont formé comme des boulons de paliers.

11. Insert d'analyseur selon l'une quelconque des revendications 1 à 10, **caractérisé en ce que** les leviers (8, 9) sont fabriqués de la tôle fine.

12. Insert d'analyseur selon l'une quelconque des revendications 1 à 11, **caractérisé en ce que** l'analyseur (3) est monté à l'intérieur de la monture d'analyseur (4) avec une petite inclination relativement à l'axe optique du trajet de rayons du microscope.

13. Insert d'analyseur selon l'une quelconque des revendications 1 à 12, **caractérisé en ce que** la partie de l'insert d'analyseur (1), qui est inséré dans le microscope polarisant, a une épaisseur maximale de 5 mm.
